# FASCICULE DE BREVET EUROPEEN

(11) **EP 1 963 808 B1**
(45) Date de publication et mention de la délivrance du brevet: **02.09.2009**
(21) Numéro de dépôt: 06841973.8
(22) Date de dépôt: 18.12.2006
(51) Int. Cl.: G01L 1/26, G01L 1/14

(54) **DISPOSITIF DE MESURE DE CHARGE**
VORRICHTUNG ZUR LASTENMESSUNG
LOAD MEASURING DEVICE

(30) Priorité: 20.12.2005 FR 0512963
(43) Date de publication de la demande: 03.09.2008
(73) Titulaire: Aktiebolaget SKF, 415 50 Göteborg (SE)
(72) Inventeur: NIARFEIX, François, F-37000 Tours (FR); WABLE, Thierry, F-37390 Cerelles (FR); CALVETTO, Sebastiano, F-37000 Tours (FR)
(74) Mandataire: Dossmann, Gérard
(86) Numéro de dépôt international: PCT/FR2006/002770
(87) Numéro de publication internationale: WO 2007/077308

(56) Documents cités:
- WO-A-20/05059492
- DE-A1- 4 419 228
- US-A- 4 572 006
- US-A- 4 939 936
- PATENT ABSTRACTS OF JAPAN vol. 018, no. 187 (P-1720), 30 mars 1994 (1994-03-30) -& JP 05 346356 A (KAZUHIRO OKADA), 27 décembre 1993 (1993-12-27)

## Description

La présente invention concerne le domaine des logements pour paliers, en particulier pour les paliers à roulements, permettant la détection de la charge appliquée sur ledit palier en fonctionnement ou à l'arrêt.

Les documents DE 2729699 et US 2002/0026839 décrivent des dispositifs de logements pour roulements. Les logements sont pourvus de jauges de contraintes afin de permettre, par la mesure des variations de contraintes en certains endroits du logement, une mesure des charges appliquées sur les roulements.

De tels dispositifs utilisent des jauges de contraintes dont la mise en place est relativement délicate et souvent peu compatible avec une production en grande série à des coûts raisonnables.

Le document FR 2 863 706 décrit un dispositif de mesure de charge sur un palier pour machine à laver, comprenant des condensateurs pourvus d'un isolant dont l'épaisseur peut varier en fonction de la charge et d'un moyen de mesure de la capacité du condensateur, la capacité étant représentative de la charge appliquée perpendiculairement sur les électrodes, l'une des électrodes étant formée par une des bagues du palier. Ce dispositif fonctionne de façon satisfaisante. Toutefois, dans certaines applications, il est souhaitable de bénéficier d'une précision de mesure élevée selon au moins une direction perpendiculaire à l'axe du roulement et par conséquent de bénéficier d'une variation d'entrefer plus importante et d'une hystérésis nulle ou négligeable. Par ailleurs, les zones de captage comprennent des pièces ou- des parties de pièces dont les coefficients de dilatation thermique sont différents. Il en résulte, lors de variations de température, des dilatations différentielles dans la zone de détection susceptibles de provoquer des variations d'entrefer qui vont perturber les mesures effectuées car elles seront interprétées comme des variations de charge. Ce phénomène est d'autant plus pénalisant que la précision recherchée est élevée.

L'invention a notamment pour but de remédier aux défauts évoqués ci-dessus.

L'invention vise une mesure de charge fiable et précise, basée sur la mesure des déplacements dus à des déformations élastiques du logement sous la charge, indépendamment de la température.

L'invention a également pour but de réaliser un dispositif de mesure de charge très peu sensible aux variations de température.

Le dispositif de détection d'une charge comprend un corps d'épreuve pourvu d'une partie externe et d'une partie interne, la partie interne étant reliée à la partie externe par au moins deux éléments de liaison élastiquement déformables sous l'effet de la charge appliquée, les parties externe et interne étant séparées par un entrefer entre des électrodes supportées par la partie externe et par la partie interne. La détection de la charge est déterminée par la mesure des déplacements entre partie interne et partie externe au niveau de l'entrefer. La partie interne comprend un corps de forme annulaire pourvu d'un alésage, et deux portions de détection diamétralement opposées, coopérant avec des portions correspondantes de la partie externe avec l'entrefer. L'entrefer reste sensiblement constant lorsque la température varie. Les épaisseurs et les coefficients de dilatation thermique des portions du corps d'épreuve susceptibles de faire varier l'entrefer et des électrodes sont déterminés de telle sorte qu'une variation positive d'au moins une portion du corps d'épreuve susceptible de faire varier l'entrefer et/ou d'une électrode est compensée par une variation négative d'au moins une autre portion du corps d'épreuve susceptible de faire varier l'entrefer et/ou d'une autre électrode.

La partie interne peut être mobile par rapport à la partie externe.

Dans un mode de réalisation, la somme des produits de l'épaisseur par le coefficient de dilatation thermique des éléments produisant une variation positive de l'entrefer est sensiblement égale à la somme des produits de l'épaisseur par le coefficient de dilatation thermique des éléments produisant une variation négative de l'entrefer. On parvient ainsi à une compensation des variations de l'entrefer.

Dans un mode de réalisation, le dispositif étant symétrique par rapport à un plan passant par un axe géométrique dudit dispositif, le produit du coefficient de dilatation thermique de la partie externe et de la distance entre le plan et une face de la partie externe est égal à la somme du produit du coefficient de dilatation thermique de la partie interne et de la distance entre le plan et une face de la partie interne et du produit du coefficient de dilatation thermique d'une première électrode et de l'épaisseur de l'électrode.

L'entrefer peut être sensiblement constant sur une plage de températures, par exemple de 0 à + 50°C dans le domaine de l'électroménager.

La partie externe et la partie interne peuvent être constituées du même matériau.

Dans un mode de réalisation, la partie externe et une portion de détection de la partie interne sont constituées dans des matériaux différents, la portion de détection de la partie interne formant une électrode et la partie externe formant une autre électrode.

Dans un mode de réalisation, le dispositif comprend une paire d'électrodes. Le dispositif peut comprendre deux paires d'électrodes pour effectuer une mesure différentielle.

Dans un mode de réalisation, le corps d'épreuve est monobloc.

Dans un mode de réalisation, le système de détection de la charge appliquée comprend une portion de détection mobile liée rigidement à la partie interne et ainsi mobile sous l'action de la charge. La portion de détection de la partie interne est découplée de la partie externe par rapport à laquelle ladite portion de détection peut se déplacer sans contact, la partie externe comprenant une portion de détection externe venant en regard avec la portion de détection mobile pour former au moins un entrefer avec la portion de détection mobile. Le système de détection de la charge appliquée comprend également des moyens de détection pour mesurer les déplacements de la partie interne par l'intermédiaire des variations de l'entrefer entre les portions de détection fixe et mobile. Les termes « fixe » et « mobile » sont ici entendus au sens relatif.

Les portions de détection peuvent être disposées à proximité d'un plan axial de symétrie, sensiblement perpendiculaire à la charge à mesurer. Le dispositif peut comprendre au moins deux plans de symétrie perpendiculaires entre eux.

Avantageusement, la partie externe, la partie interne et les éléments de liaison forment un ensemble monobloc. Ledit ensemble monobloc peut être obtenu en grande série par moulage d'un alliage métallique ou d'un matériau synthétique ayant des propriétés mécaniques, notamment d'élasticité, souhaitées pour l'application considérée. Un même moule prévu pour un ensemble monobloc peut servir à la fabrication d'ensembles monoblocs de caractéristiques élastiques différentes, selon la composition choisie du matériau, ce qui s'avère particulièrement économique.

Dans un mode de réalisation, la portion de détection fixe est rapportée à l'intérieur de la partie externe.

Dans un autre mode de réalisation, la portion de détection fixe est monobloc avec la partie externe.

La partie externe peut comprendre un corps comprenant deux portions chacune pourvue d'une rainure dans laquelle vient en saillie une portion de détection de la partie interne.

Grâce à l'invention, on bénéficie d'un logement permettant une mesure simple et fiable de la charge appliquée, en évitant un effet des variations thermiques nuisible à la précision.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'un dispositif de logement muni d'un palier monté sur un arbre ;
- les figures 2 et 3 sont des vues en perspective du dispositif de logement de la figure 1 ;
- la figure 4 est une vue de détail en coupe radiale du dispositif de la figure 1 ;
- les figures 5 et 6 montrent des variantes de la figure 4 ; et
- les figures 7 à 9 correspondent aux figures 4 à 6.

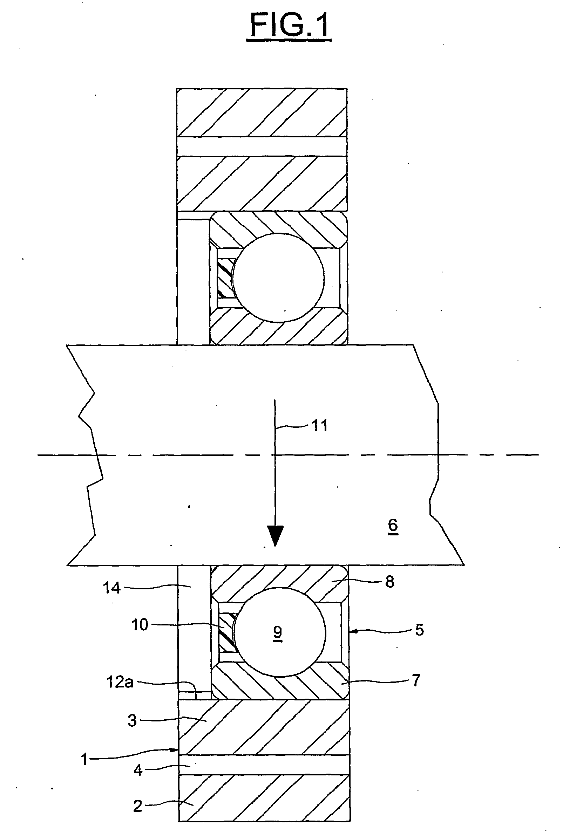

Comme on peut le voir sur la figure 1, le dispositif de logement est pourvu d'un corps d'épreuve 1 comprenant une partie externe 2 et une partie interne 3 séparées par un espace 4. Les parties externe 2 et interne 3 sont délimitées par deux plans radiaux. La partie interne 3 est pourvue d'un alésage, dans lequel est disposé un palier à roulement 5 monté sur un arbre 6. La partie externe 2 est prévue pour être disposée dans un ensemble mécanique, par exemple un carter, un bâti ou un support, non représenté.

Le palier à roulement 5 comprend une bague extérieure 7, une bague intérieure 8, une rangée d'éléments roulants 9, ici des billes, maintenus à espacements circonférentiels réguliers par une cage 10. Les éléments roulants 9 sont disposés entre un chemin de roulement intérieur de la bague extérieure 7 et un chemin de roulement extérieur de la bague intérieure 8. Le palier à roulement 5 est délimité par la surface extérieure axiale de la bague extérieure 7, l'alésage de la bague intérieure 8 et les surfaces frontales radiales des bagues extérieure 7 et intérieure 8 qui passent d'un côté et de l'autre des éléments roulants 9, chacune par un plan radial, confondu d'un côté avec le plan radial délimitant le corps d'épreuve 1. Les bagues 7 et 8 sont ici réalisées en métal, par exemple en acier, et les chemins de roulement font l'objet d'un usinage avec enlèvement de copeaux.

L'arbre 6 est susceptible de subir une charge radiale orientée dans le sens de la flèche 11. Ladite charge provoque un léger déplacement radial de l'arbre 6, du palier à roulement 5 et de la partie interne 3 par rapport à la partie externe 2.

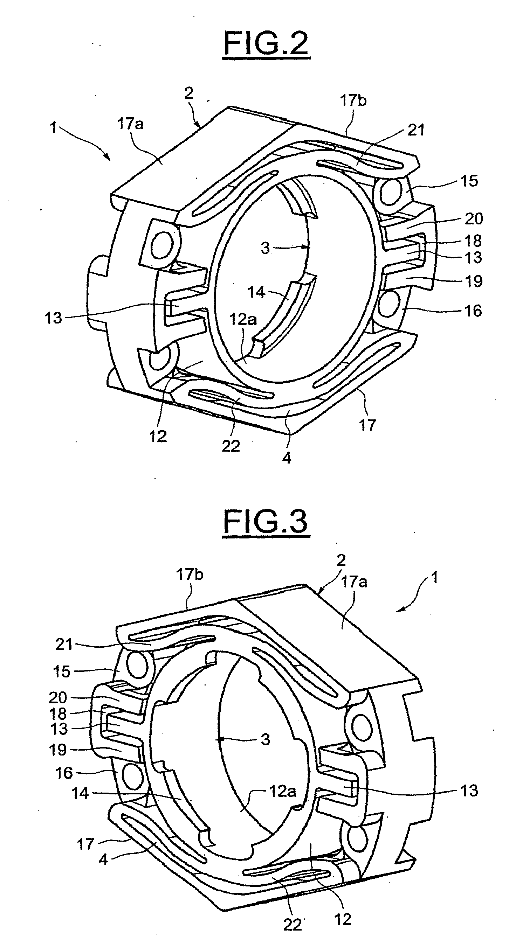

La structure du corps d'épreuve 1 est exposée plus en détail sur les figures 2 et 3. La partie interne 3 comprend un corps de forme annulaire, délimité axialement par les plans radiaux précités et présentant une épaisseur sensiblement constante. La partie interne 3 comprend également deux portions de détection mobile 13, en forme d'oreilles diamétralement opposées s'étendant vers l'extérieur à partir du corps 12. Dans l'exemple illustré, les portions de détection mobile 13 présentent une longueur axiale sensiblement égale à celle du corps 12 et du corps d'épreuve 1. La partie interne 3 comprend également un rebord 14, se présentant sous la forme d'une pluralité de segments séparés les uns des autres et circonférentiellement régulièrement répartis, affleurant avec l'un des plans radiaux délimitant le corps d'épreuve 1 et s'étendant radialement vers l'intérieur à partir de l'alésage 12a du corps annulaire 12. Le rebord 14 sert de butée axiale au palier à roulement 5, lors du montage dudit palier à roulement 5 dans le logement, et garantit ainsi un positionnement axial du palier à roulement 5. Les portions de détection mobile 13 et le rebord 14 sont monoblocs avec le corps 12.

La partie externe 2 comprend un corps 15, prévu pour être monté dans l'alésage d'un carter ou équivalent. Le corps 15 comprend deux portions épaisses 16, symétriques par rapport à un plan passant par l'axe du corps d'épreuve 1, et deux portions 17 de faible épaisseur radiale, chacune en forme de toit, possédant deux pans 17a et 17b, se rejoignant dans un plan de symétrie passant par l'axe du corps d'épreuve 1. Les pans 17a et 17b présentent une épaisseur sensiblement constante, sauf à l'endroit de leur jonction, en raison d'un large congé de raccordement, du côté concave, c'est-à-dire du côté intérieur. Les pans 17a et 17b se raccordent aux portions épaisses 16 à l'opposé de l'arête du toit.

Chaque portion épaisse 16 comprend une rainure 18 s'étendant axialement sur toute la longueur du corps d'épreuve 1, et dans laquelle vient en saillie la portion de détection mobile 13 de la partie interne 3. La portion épaisse 16 se prolonge radialement vers l'intérieur pour former des portions de détection externe 19 et 20, en forme de mâchoire, entourant la portion de détection mobile 13.

Le corps d'épreuve 1 se complète par une portion de liaison 21 pourvue de quatre bras 22, de forme arrondie et déformable, se raccordant à la partie externe 3, sensiblement au niveau du raccordement entre la portion épaisse 16 et la portion de faible épaisseur 17, et se raccordant à la partie interne 3 au droit de la jonction entre les pans 17a et 17b de la portion de faible épaisseur 17. Au même endroit, deux bras 22 symétriques se raccordent également l'un à l'autre. Entre les raccordements précités, les bras 22 présentent une forme arrondie entre la partie interne 3 et la portion de faible épaisseur 17 et s'étendent axialement sur tout ou partie de la longueur du corps d'épreuve 1.

La partie externe 2, la partie interne 3 et la partie de liaison 21 sont monoblocs et peuvent être réalisées par moulage d'un matériau synthétique conducteur, ou encore par moulage d'un métal, par exemple d'un alliage d'aluminium. Le corps d'épreuve 1 est symétrique par rapport à deux plans perpendiculaires passant par l'axe dudit corps d'épreuve 1, l'un des plans passant par la jonction entre les pans 17a et 17b, et l'autre plan passant par les portions de détection mobile 13, qui sont ainsi angulairement décalés de 180°.

A l'état de repos, l'entrefer 25 entre la portion de détection mobile 13 et la portion de détection fixe 19 est égal à l'entrefer 26 entre la portion de détection mobile 13 et la portion de détection fixe 20, et ce d'un côté et de l'autre du corps d'épreuve 1. Lorsqu'une charge radiale est appliquée, par exemple selon la direction 11, c'est-à-dire verticalement vers le bas, la partie externe 2 reste sensiblement immobile, tandis que la partie interne 3 se déplace dans le sens de la charge appliquée. Ainsi, l'entrefer 25 entre la portion de détection mobile 13 et la portion de détection fixe 19 diminue, et l' entrefer 26 entre la portion de détection mobile 13 et la portion de détection fixe 20 s'accroît. Les bras de liaison 22 se déforment vers le bas, sans substantiellement déformer la portion interne 3 en raison, d'une part, de sa structure annulaire, et d'autre part, de la symétrie du corps d'épreuve 1 dans son ensemble, et sans non plus déformer substantiellement la partie externe 2, notamment en raison de la forte épaisseur de la portion épaisse 16, une légère déformation de la portion de faible épaisseur 17 pouvant être tolérée sans nuire à la mesure.

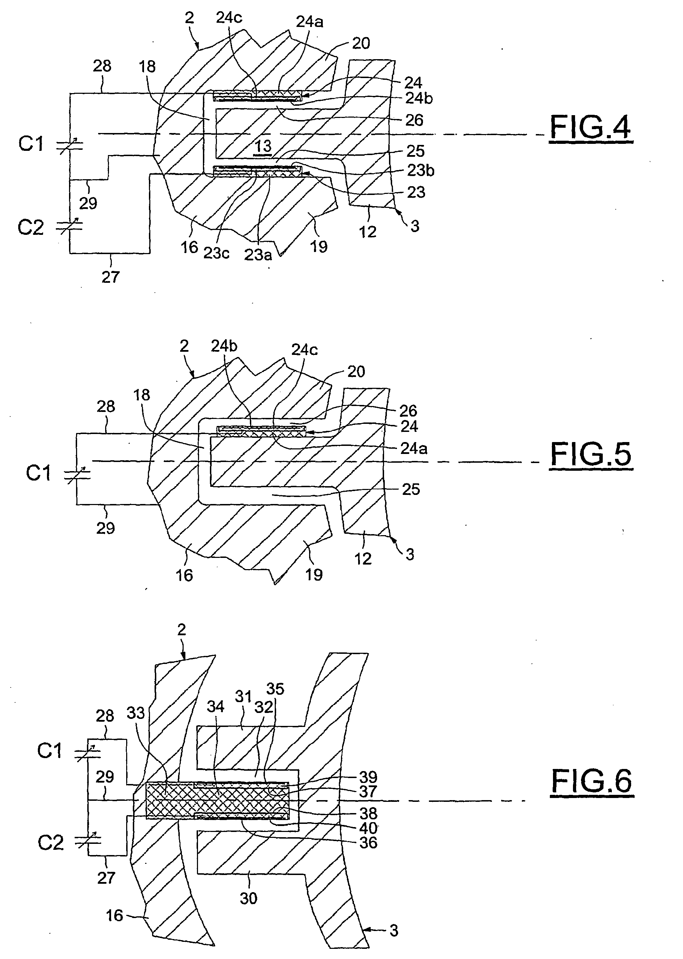

Comme illustré sur la figure 4, la partie externe 2 supporte deux électrodes rapportées 23 et 24, respectivement disposées sur les portions de détection fixes 19 et 20, sur les bords opposés de la rainure 18. Chaque électrode 23, 24 comprend une couche isolante 23a, 24a, par exemple réalisée en matériau synthétique, une couche conductrice 23b, 24b disposée du côté de la portion de détection mobile 13, et une couche conductrice 23c, 24c interne ou électrode de garde formant un blindage électromagnétique. Plus particulièrement, chaque électrode 23, 24 peut être réalisée par une portion de carte de circuit imprimée, dont le support forme la couche isolante 23 a, 24a, et dont les circuits conducteurs métalliques forment les couches conductrices 23b, 24b et 23c, 24c. Les électrodes 23 et 24 peuvent ainsi être fabriquées à faible coût, puis fixées, par exemple par collage, sur les bords de la rainure 18.

On forme ainsi un circuit électrique comprenant deux condensateurs de capacités variables, C1 et C2, le condensateur C1 étant formé par la couche conductrice 24b et la portion de détection mobile 13 séparée par l'entrefer 26, et le condensateur C2 étant formé par la couche conductrice 23b de l'électrode 23, et la portion de détection mobile 13 séparée par l'entrefer 25.

La capacité de chaque condensateur C1, C2 est directement représentative de la valeur des entrefers 25 et 26 et, par conséquent, de la charge appliquée sur la partie interne du corps d'épreuve 1, dans la mesure où l'application de la charge provoque le déplacement de la portion de détection mobile 13 par rapport aux électrodes 23 et 24 qui restent fixes. Chaque électrode 23, 24 est pourvue d'un fil de sortie 27, 28, et la masse conductrice du corps d'épreuve 1 est reliée par un fil 29 permettant ainsi l'exploitation des signaux de sortie.

Dans le mode de réalisation illustré sur la figure 5, le dispositif est dépourvu d'électrode 23. Seule la capacité C1 varie alors en fonction de l'entrefer entre la portion de détection mobile 13 et l'électrode 24. L'entrefer entre la portion de détection mobile 13 et le bord de la rainure 18 opposé à l'électrode 24 reste sans influence, dans la mesure où les deux surfaces sont équipotentielles grâce à la réalisation monobloc en matériau conducteur de la partie externe 2, de la partie interne 3 et de la partie de liaison 21 du corps d'épreuve 1.

Dans le mode de réalisation illustré sur la figure 6, le schéma électrique est semblable à celui de la figure 4, avec deux condensateurs C1 et C2. Toutefois, la partie interne 3 comprend deux portions de détection mobile 30 et 31, en saillie radialement vers l'extérieur, définissant entre elles une rainure 32 allongée axialement. La partie externe 2 comprend une languette 33 dirigée radialement vers l'intérieur, disposée dans la rainure 32 entre les portions de détection mobile 30 et 31. La languette 33 comprend un corps en matériau synthétique 34 isolant, dans lequel sont disposées une électrode de mesure 35 et une électrode de mesure 36 faisant face respectivement aux portions de détection mobile 30 et 31 de la partie interne 3, et deux électrodes de garde 37 et 38 et disposées à une faible distance des électrodes de mesure 35 et 36 à l'intérieur de la languette 33, tandis que les électrodes de mesure 35 et 36 sont disposées en surface. Une couche diélectrique 39, 40 est disposée entre l'électrode 35, 36 et l'électrode de garde 37, 38. La languette 33 peut être réalisée sous la forme d'une portion de carte à circuit imprimée multicouche.

Dans tous ces modes de réalisation, des électrodes de garde peuvent également être disposées autour des électrodes de mesure, dans le même plan que ces dernières.

Avantageusement, les électrodes de mesure et les électrodes de garde peuvent être excitées simultanément afin de créer un blindage actif efficace.

Grâce à l'ensemble de ces précautions, on peut ainsi délimiter parfaitement d'un point de vue électrique les électrodes de mesure et éviter les efforts de bord.

On évite également grâce au blindage électromagnétique par les électrodes de garde les capacités parasites et les perturbations de mesure de capacité qui seraient dues à des champs électromagnétiques extérieurs. On s'assure ainsi que la mesure de capacité effectuée est bien représentative de la variation d'entrefer entre l'électrode de mesure et l'électrode correspondante lui faisant face, c'est-à-dire entre les électrodes fixes et mobiles.

Les modes de réalisation des figures 4 et 6 permettent d'effectuer des mesures de capacités différentielles, ce qui augmente considérablement la fiabilité et la précision de la mesure des variations d'entrefer par le biais des mesures de capacités. En effet, des variations parasites de capacités qui peuvent être sensibles au niveau de chaque couple d'électrodes s'annulent ou s'atténuent mutuellement par la mesure différentielle.

Le corps d'épreuve 1, considéré ici comme un corps d'épreuve déformable, est utilisé dans son domaine élastique. Cette utilisation permet d'avoir une relation entre charge et déformation sans hystérésis, puisqu'il n'y a pas de frottement. Pour limiter la fatigue des matériaux, le dimensionnement des bras de liaison 21 limite leur utilisation sous un plafond. On peut choisir une contrainte maximale appliquée, de l'ordre de 80% de la limite élastique du dispositif de logement, pour pouvoir supporter 10 millions de cycles de déformation élastique sans déformation permanente significative.

Les matériaux des différents éléments voisins de l'entrefer, c'est-à-dire du corps d'épreuve 1 et des électrodes, sont choisis avec des coefficients de dilatation et des dimensions tels que les variations dimensionnelles des éléments dues aux changements de température se compensent et ne provoquent pas de variations significatives d'entrefer. Dans ce but, le rapport entre les coefficients de dilatation thermique des matériaux utilisés pour lesdits éléments voisins de l'entrefer, est choisi proche de l'inverse du ratio des épaisseurs desdits éléments pour permettre un entrefer constant sur une large plage de température.

Par exemple, si on dispose d'un corps d'épreuve en alliage d'aluminium avec un coefficient d'expansion thermique de 23 ppm/°K, laissant un entrefer initial Eᵢ de 1,5 mm avant assemblage de l'électrode rapportée, on peut choisir une électrode rapportée composée par exemple d'un circuit imprimé type verre-téflon, de coefficient d'expansion thermique de l'ordre de 34,5 ppm/°K et d'épaisseur standard d'1 mm. L'entrefer du corps d'épreuve en aluminium se dilate de 1,5 mm x 23 ppm/°K = 34,5 nanomètre/°K. L'électrode rapportée se dilate de 1 mm x 34,5 ppm/°K = 34,5 nanomètre/°K. L'entrefer utile de mesure séparant la face de l'électrode rapportée et la face correspondante en aluminium est alors constant et égal à 1,5 - 1 = 0,5 mm.

A l'inverse, on peut choisir d'optimiser l'entrefer initial du support en fonction des matériaux utilisés pour le circuit imprimé formant l'électrode. Par exemple, sachant qu'une électrode rapportée réalisée en un matériau possédant un coefficient d'expansion thermique de 50 ppm/°K et d'épaisseur standard de 0,5 mm est particulièrement économique et en désignant par Eᵢ l'entrefer initial du corps d'épreuve en aluminium, on aura la relation : Eᵢ x 23 = 0,5 x 50, d'où on déduit Eᵢ = 1,086 mm, soit un entrefer utile de mesure de Eᵢ - 0,5 = 0,586 mm.

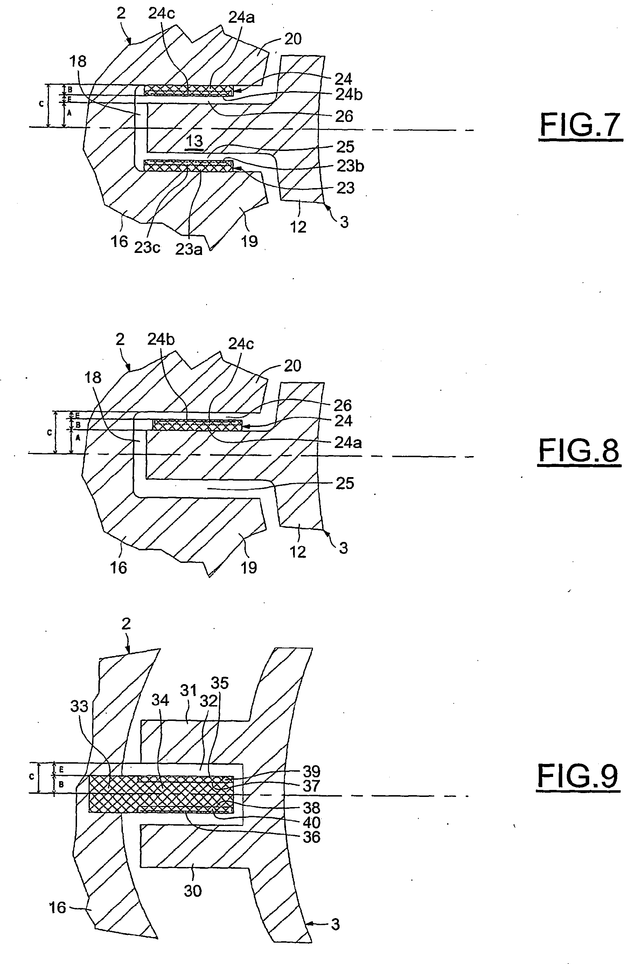

Comme illustré sur les figures 7 à 9, la valeur E de l'entrefer 23 est égale à la différence entre la distance C séparant le plan de symétrie du corps d'épreuve 1 du bord de la rainure 18 et la somme de la distance A séparant le plan de symétrie du corps d'épreuve 1 du bord de la portion de détection mobile 13 et de l'épaisseur B de l'électrode, soit E = C - A - B. En cas de variation thermique, la variation d'entrefer dE = dC - dA - dB = C K₂ - A K₃ - B K₂₃, avec K₂ le coefficient de dilatation thermique du matériau constituant la partie externe 2, K₃ le coefficient de dilatation thermique du matériau constituant la partie interne 3 et K₂₃ le coefficient de dilatation thermique du matériau constituant l'électrode 23.

Dans le mode de réalisation illustré sur les figures 7 et 8, on a K₂ = K₃ = Kₐ₁ avec Kₐ₁ le coefficient de dilatation thermique du métal constituant les parties externe 2 et interne 3, d'où (C - A)Kₐ₁ = B K₂₃.

Dans le mode de réalisation illustré sur la figure 9, on a A = 0, d'où C Kₐ₁ = B K₂₃.

On peut, bien entendu, prévoir de prendre en compte un nombre de matériaux plus élevé, par exemple trois ou quatre.

Le dispositif de logement capteur réalisé suivant un aspect de l'invention est particulièrement précis et fiable. La mesure effectuée est sans hystérésis significative et n'est pratiquement pas affectée par des phénomènes extérieurs parasites, tels que des variations de température ou d'hygrométrie.

Grâce à l'invention, on dispose donc d'un logement à capteurs de charge particulièrement économique, pouvant être utilisé avec des roulements conventionnels ou pourvu de capteurs de vitesse et/ou de température, pouvant être montés de façon simple, le logement assurant une mesure précise et fiable de la charge.

## Revendications

1. Dispositif de détection d'une charge comprenant un corps d'épreuve (1) pourvu d'une partie externe (2) et d'une partie interne (3), la partie interne étant reliée à la partie externe par au moins deux éléments de liaison (21) élastiquement déformables sous l'effet de la charge appliquée, les parties externe et interne étant séparées par un entrefer (25) entre des électrodes (13, 23) supportées par la partie externe et par la partie interne, la détection de la charge étant déterminée par la mesure des déplacements entre partie interne et partie externe au niveau de l'entrefer, la partie interne (3) comprenant deux portions de détection (13) coopérant avec des portions correspondantes de la partie externe (2) avec l'entrefer (25), **caractérisé par le fait que** la partie externe est prévue pour être montée dans un carter ou équivalent et que la partie interne (3) comprend un corps de forme annulaire (12) pourvu d'un alésage (12a) apte à recevoir un palier à roulement (5) monté sur un arbre susceptible de subir la charge à détecter, les deux portions de détection (13) étant diamétralement opposées s'étendant vers l'extérieur à partir du corps (12), ledit entrefer (25) restant sensiblement constant lorsque la température varie, les épaisseurs et les coefficients de dilatation thermique des portions du corps d'épreuve susceptibles de faire varier l'entrefer et des électrodes étant déterminés de telle sorte qu'une variation dimensionnelle positive d'au moins une portion du corps d'épreuve susceptible de faire varier l'entrefer et/ou d'une électrode est compensée par une variation dimensionnelle négative d'au moins une autre portion du corps d'épreuve susceptible de faire varier l'entrefer et/ou d'une autre électrode.

2. Dispositif selon la revendication 1, dans lequel la somme des produits de l'épaisseur par le coefficient de dilatation thermique des éléments produisant une variation positive de l'entrefer est sensiblement égale à la somme des produits de l'épaisseur par le coefficient de dilatation thermique des éléments produisant une variation négative de l' entrefer.

3. Dispositif selon la revendication 1 ou 2, dans lequel, le dispositif étant symétrique par rapport à un plan passant par un axe géométrique dudit dispositif, le produit du coefficient de dilatation thermique de la partie externe et de la distance entre le plan et une face de la partie externe est égal à la somme du produit du coefficient de dilatation thermique de la partie interne et de la distance entre le plan et une face de la partie interne et du produit du coefficient de dilatation thermique d'une première électrode et de l'épaisseur de l'électrode.

4. Dispositif selon la revendication 3, dans lequel la partie externe et la partie interne sont constituées du même matériau.

5. Dispositif selon la revendication 3, dans lequel la partie externe et une portion de détection de la partie interne sont constituées dans des matériaux différents, la portion de détection formant une électrode et la partie externe formant une autre électrode.

6. Dispositif selon l'une quelconque des revendications précédentes, comprenant une paire d'électrodes.

7. Dispositif selon l'une quelconque des revendications précédentes, comprenant deux paires d'électrodes pour effectuer une mesure différentielle.

8. Dispositif selon l'une quelconque des revendications précédentes, dans lequel le corps d'épreuve (1) est monobloc.

9. Dispositif selon l'une quelconque des revendications précédentes, dans lequel la partie externe (2) comprend un corps (15) comprenant deux portions (16) chacune pourvue d'une rainure (18) dans laquelle vient en saillie une portion de détection de la partie interne (3).

## Claims

1. Load detecting device comprising a proof body (1) provided with an outer part (2) and with an inner part (3), the inner part being connected to the outer part by at least two connecting elements (21) that can be elastically deformed under the effect of the applied load, the outer and inner parts being separated by an air gap (25) between electrodes (13, 23) supported by the outer part and by the inner part, the load being detected by measuring displacements between the inner part and outer part in the air gap area, the inner part (3) comprising two detection portions (13) collaborating with corresponding portions of the outer part (2) with the air gap (25), **characterized in that** the outer part is designed to be mounted in a casing or the equivalent and **in that** the inner part (3) comprises a body of annular shape (12) provided with a bore (12a) able to accommodate a rolling bearing (5) mounted on a shaft capable of sustaining the load that is to be detected, the two detection portions (13) being diametrically opposed and extending outwards from the body (12), the said air gap (25) remaining substantially constant as the temperature varies, the thicknesses and the thermal expansion coefficients of the portions of the proof body able to vary the air gap and of the electrodes being determined in such a way that a positive dimensional variation of at least one portion of the proof body able to vary the air gap and/or of an electrode is compensated for by a negative dimensional variation of at least one other portion of the proof body able to vary the air gap and/or of another electrode.

2. Device according to Claim 1, in which the sum of the products of the thickness times the thermal expansion coefficient of the elements that produce a positive variation in the air gap is substantially equal to the sum of the products of the thickness times the thermal expansion coefficient of the elements that produce a negative variation in the air gap.

3. Device according to Claim 1 or 2, in which, with the device symmetric with respect to a plane passing through a geometric axis of the said device, the product of the thermal expansion coefficient of the outer part and of the distance between the plane and one face of the outer part is equal to the sum of the product of the thermal expansion coefficient of the inner part and of the distance between the plane and one face of the inner part and of the product of the thermal expansion coefficient of a first electrode and of the thickness of the electrode.

4. Device according to Claim 3, in which the outer part and the inner part are made of the same material.

5. Device according to Claim 3, in which the outer part and a detection portion of the inner part are made of different materials, the detection portion forming one electrode and the outer part forming another electrode.

6. Device according to any one of the preceding claims, comprising a pair of electrodes.

7. Device according to any one of the preceding claims, comprising two pairs of electrodes to make a differential measurement.

8. Device according to any one of the preceding claims, in which the proof body (1) is a one-piece body.

9. Device according to any one of the preceding claims, in which the outer part (2) comprises a body (15) comprising two portions (16) each provided with a slot (18) into which a detection portion of the inner part (3) projects.

## Patentansprüche

1. Vorrichtung zur Erfassung einer Last mit einem Prüfkörper (1), der mit einem Außenteil (2) und einem Innenteil (3) versehen ist, wobei der Innenteil mit dem Außenteil durch wenigstens zwei Verbindungselemente (21) verbunden ist, die unter der Wirkung der anliegenden Last elastisch deformierbar sind, der Außenteil und der Innenteil durch einen Spalt (25) zwischen Elektroden (13, 23) getrennt sind, die durch den Innenteil und den Außenteil gehalten sind, die Erfassung der Last durch die Messung der Lageänderungen zwischen dem Innenteil und dem Außenteil im Bereich des Spaltes bestimmt wird und der Innenteil (3) zwei Erfassungsteile (13) aufweist, die mit korrespondierenden Teilen des Außenteils (2) über den Spalt (25) zusammenwirken, **dadurch gekennzeichnet, dass** der Außenteil zur Montage in einem Gehäuse oder dergleichen vorgesehen ist und der Innenteil (3) einen ringförmigen Körper (12) aufweist, der mit einer Bohrung (12a) versehen ist, die zur Aufnahme eines Wälzlagers (5) geeignet ist, das auf einer Welle montiert ist, die dazu fähig ist, die zu messende Last auszuhalten, wobei die zwei Erfassungsteile (13) sich diametral gegenüberliegend nach außen weg von dem Körper (12) erstrecken, der besagte Spalt (25) ungefähr konstant bleibt, wenn sich die Temperatur ändert, und die Dicken und Wärmeausdehnungskoeffizienten von Bereichen des den Spalt verändernden Prüfkörpers und der Elektroden in der Weise bestimmt sind, dass eine positive
Dimensionsänderung wenigstens eines Bereiches des den Spalt verändernden Prüfkörpers und/oder einer Elektrode durch eine negative Dimensionsänderung wenigstens eines anderen Bereiches des den Spalt verändernden Prüfkörpers und/oder einer anderen Elektrode kompensiert wird.

2. Vorrichtung nach Anspruch 1, bei welcher die Summe der Produkte aus Dicke und Wärmeausdehnungskoeffizient der Elemente, die eine positive Veränderung des Spaltes erzeugen, ungefähr gleich der Summe der Produkte aus Dicke und Wärmeausdehnungskoeffizienten der Elemente ist, die eine negative Veränderung des Spaltes erzeugen.

3. Vorrichtung nach Anspruch 1 oder 2, bei welcher die Vorrichtung symmetrisch in Bezug auf eine durch eine geometrische Achse besagter Vorrichtung verlaufende Ebene ist, wobei das Produkt aus dem Wärmeausdehnungskoeffizienten des Außenteils und dem Abstand zwischen der Ebene und einer Flanke des Außenteils gleich der Summe aus dem Produkt aus dem Wärmeausdehnungskoeffizienten des Innenteils und dem Abstand zwischen der Ebene und einer Flanke des Innenteils und dem Produkt aus dem Wärmeausdehnungskoeffizienten einer ersten Elektrode und der Stärke der Elektrode ist.

4. Vorrichtung nach Anspruch 3, bei welcher der Innenteil und der Außenteil aus dem gleichen Material bestehen.

5. Vorrichtung nach Anspruch 3, bei welcher der Außenteil und ein Erfassungsteil des Innenteils aus unterschiedlichen Materialien bestehen, wobei der Erfassungsbereich eine Elektrode und der Außenteil eine andere Elektrode bildet.

6. Vorrichtung nach einem der vorhergehenden Ansprüche, die ein Paar Elektroden aufweist.

7. Vorrichtung nach einem der vorhergehenden Ansprüche, die zwei Paar Elektroden zur Durchführung einer differentiellen Messung aufweist.

8. Vorrichtung nach einem der vorhergehenden Ansprüche, bei welcher der Prüfkörper (1) einstückig ist.

9. Vorrichtung nach einem der vorhergehenden Ansprüche, bei welcher der Außenteil (2) einen Körper (15) aufweist, der zwei Bereiche (16) besitzt, die jeweils mit einer Ausnehmung (18) versehen sind, in welche ein vorspringender Erfassungsteil des Innenteils (3) reicht.
